# EUROPEAN PATENT APPLICATION

(11) **EP 4 477 400 A1**
(43) Date of publication of application: **18.12.2024**
(21) Application number: 23816240.8
(22) Date of filing: 08.05.2023
(51) Int. Cl.: B30B 3/00, H01M 4/04, B30B 15/06, B30B 15/34

(54) **ROLLING ROLL AND ELECTRODE ROLLING DEVICE COMPRISING SAME**

(30) Priority: 31.05.2022 KR 20220066839
(71) Applicant: LG Energy Solution, Ltd., Seoul 07335 (KR)
(72) Inventor: JEONG, Seok Ho, Daejeon 34122 (KR)
(74) Representative: Plasseraud IP
(86) International application number: PCT/KR2023/006185
(87) International publication number: WO 2023/234576

(57) **Abstract**

The present invention relates to a rolling roll and an electrode rolling device comprising the same. The rolling roll according to one example of the present invention comprises a rotating shaft, a pair of roll members mounted apart from each other at a predetermined interval on the rotating shaft, and an induction heating roll disposed between the pair of roll members, mounted on the rotation shaft, and including an induction coil provided to be inductively heated upon rotation of the rotating shaft, and a main body surrounding the induction coil.

## Description

### Technical Field

The present invention relates to a rolling roll and an electrode rolling device comprising the same, and specifically, relates to a rolling roll and an electrode rolling device capable of preventing wrinkling of an uncoated portion of an electrode sheet by providing heat to the uncoated portion of the electrode sheet in a rolling process of the electrode sheet.

This application claims the benefit of priority based on Korean Patent Application No. 10-2022-0066839 dated May 31, 2022, the disclosure of which is incorporated herein by reference in its entirety.

### Background Art

As application fields for secondary batteries expand, demand for higher capacity secondary batteries rapidly increases. As a method of increasing the capacity of the secondary battery, research on a technology to increase loading amounts of electrode active materials has been conducted. However, when the loading amount of the electrode active material is increased, the volume of the electrode increases. In this instance, to reduce the volume of the electrode, a process of rolling the electrode at a higher pressure is required.

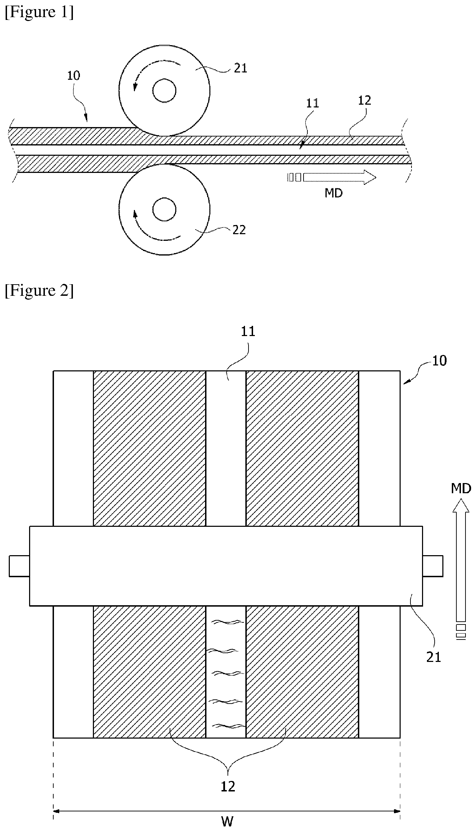

Figures 1 and 2 are diagrams for explaining a process of rolling an electrode sheet using a conventional rolling roll.

Referring to Figures 1 and 2, an electrode base material (10) has a coated portion (12) where an electrode active material of a positive electrode or a negative electrode is applied, and an uncoated portion (11) where no electrode active material is applied. The uncoated portion (11) is a portion where no electrode active material is coated.

Referring to Figure 2, the coated portion (12) may be provided in the form of a line along the traveling direction (MD) of the electrode base material (10), and a plurality of coated portions (12) may be provided along the width direction (W) of the electrode base material (10), where the uncoated portion (11) is located between two adjacent coated portions (12).

The electrode base material (10) undergoes a rolling process while passing through a pair of rolling rollers (21, 22). In this instance, the rolling rollers (21, 22) is in contact with the coated portions (12) and pressurize the coated portions (12). In this way, through the rolling process, the density of the coated portions (12) in the electrode base material (10) increases and the volume decreases.

However, in the process of rolling the electrode base material (10) at a high pressure, there is a problem that in the uncoated portion (11), wrinkles are severely generated, or ruptures occur.

### Disclosure

### Technical Problem

It is an object of the present invention to provide a rolling roll capable of preventing wrinkling of an uncoated portion of an electrode sheet by providing heat to the uncoated portion of the electrode sheet in a rolling process of the electrode sheet, and an electrode rolling device comprising the same.

### Technical Solution

To solve the above-described problem, the rolling roll according to one example of the present invention comprises a rotating shaft, a pair of roll members mounted apart from each other at a predetermined interval on the rotating shaft, and an induction heating roll disposed between the pair of roll members, mounted on the rotation shaft, and including an induction coil provided to be inductively heated upon rotation of the rotating shaft, and a main body surrounding the induction coil.

Also, the induction coil may be provided to generate heat upon alternate current application. In addition, the main body of the induction heating roll may have a heating roll surface which is heated by heat transferred from the induction coil. The heat may be transferred to the outside through the heating roll surface.

In addition, the induction heating roll comprises an iron core, and the induction coil is disposed to surround the iron core. The induction coil may be provided as one, or two or more.

Furthermore, the induction coil is electrically connected to a power supply part, and when an alternating voltage is applied to the induction coil through the power supply part, alternating magnetic fluxes are generated, and accordingly an induced current is generated, where such an induced current may cause the main body to generate Joule heat. In such a structure, the generated heat may be transferred to the outside through the heating roll surface. In addition, when the induction heating roll is located on the uncoated portion of the electrode sheet, heat may be transferred toward the uncoated portion of the electrode sheet in a rolling process, and forced stretching may easily occur in the uncoated portion.

The pair of roll members may comprise a first roll member disposed on one side of the induction heating roll and having a first roll surface in contact with a rolling object, and a second roll member disposed on the other side of the induction heating roll and having a second roll surface in contact with the rolling object. The induction heating roll is disposed between the first roll member and the second roll member. In this instance, the first roll member contacts one surface of the induction heating roll, and the second roll member contacts the other surface of the induction heating roll.

The first roll member may have a first inner side surface in contact with the induction heating roll and a first outer side surface in a direction opposite to the first inner side surface. Also, the first inner side surface and the first outer side surface may be provided in parallel. In this instance, the first roll surface connects the first inner side surface and the first outer side surface. In addition, the first inner side surface may have the same diameter as the diameter of the induction heating roll. In such a structure, the heating roll surface of the induction heating roll and the first roll surface of the first roll member may be connected without any step.

Also, the first roll member may be provided so that the diameter of the first outer side surface is smaller than the diameter of the first inner side surface.

As one example, the first roll member may have a truncated cone shape in which the cross-sectional diameter of the first roll surface becomes smaller as it goes from the first inner side surface to the first outer side surface.

Also, the first roll member may be provided so that the radius of the first inner side surface is larger than the radius of the first outer side surface in a range of 0.3mm to 0.5mm.

In addition, the first roll member may comprise a first core part coupled to the rotating shaft, and a first surface part surrounding the first core part and having a lower thermal conductivity than the thermal conductivity of the first core part.

Furthermore, the second roll member may have a second inner side surface in contact with the induction heating roll and a second outer side surface in a direction opposite to the second inner side surface. Also, the second inner side surface may have the same diameter as the diameter of the induction heating roll. In addition, the second inner side surface and the second outer side surface may be provided to be in parallel. At this time, the second roll surface may connect the second inner side surface and the second outer side surface. In such a structure, the heating roll surface of the induction heating roll and the second roll surface of the second roll member may be connected without any step.

Also, the second roll member may be provided so that the diameter of the second outer side surface is smaller than the diameter of the second inner side surface.

As one example, the second roll member may have a truncated cone shape in which the cross-sectional diameter of the second roll surface becomes smaller as it goes from the second inner side surface to the second outer side surface.

Also, the second roll member may be provided so that the radius of the second inner side surface is larger than the radius of the second outer side surface in a range of 0.3mm to 0.5mm.

In addition, the second roll member may comprise a second core part coupled to the rotating shaft, and a second surface part surrounding the second core part and having a lower thermal conductivity than the thermal conductivity of the second core part.

Furthermore, the pair of roll members may be symmetrically arranged based on the induction heating roll.

In addition, the electrode rolling device according to one example of the present invention comprises a pair of rolling rolls disposed on a traveling path of an electrode sheet provided with a coated portion and an uncoated portion, and pressurizing the electrode sheet up and down, and a control part controlling an operation of each rolling roll.

Each rolling roll comprises a rotating shaft, a pair of roll members mounted apart from each other at a predetermined interval on the rotating shaft, and each positioned on the coated portion of the electrode sheet, and an induction heating roll disposed between the pair of roll members, mounted on the rotating shaft, located on the uncoated portion of the electrode sheet, and including an induction coil provided to be inductively heated upon rotation of the rotating shaft, and a main body surrounding the induction coil.

Also, the induction coil is provided to generate heat upon alternate current application, and the main body of the induction heating roll has a heating roll surface which is heated by heat transferred from the induction coil and disposed to face the uncoated portion.

In addition, the pair of roll members may each comprise a first roll member disposed on one side of the induction heating roll and having a first roll surface in contact with a rolling object, and a second roll member disposed on the other side of the induction heating roll and having a second roll surface in contact with the rolling object.

Furthermore, the first roll member has a first inner side surface being in contact with the induction heating roll and having the same diameter as the diameter of the induction heating roll, and a first outer side surface in a direction opposite to the first inner side surface, and the first roll surface connects the first inner side surface and the first outer side surface.

Also, the second roll member has a second inner side surface being in contact with the induction heating roll and having the same diameter as the diameter of the induction heating roll, and a second outer side surface in a direction opposite to the second inner side surface, and the second roll surface connects the second inner side surface and the second outer side surface.

In addition, the first roll member is provided so that the diameter of the first outer side surface is smaller than the diameter of the first inner side surface, and the second roll member is provided so that the diameter of the second outer side surface is smaller than the diameter of the second inner side surface.

Furthermore, the first roll member may comprise a first core part coupled to the rotating shaft, and a first surface part surrounding the first core part and having a lower thermal conductivity than the thermal conductivity of the first core part.

In addition, the second roll member may comprise a second core part coupled to the rotating shaft, and a second surface part surrounding the second core part and having a lower thermal conductivity than the thermal conductivity of the second core part.

### Advantageous Effects

As discussed above, according to the rolling roll related to at least one example of the present invention and the electrode rolling device comprising the same, by providing the uncoated portion of the electrode sheet with heat when the rolling roll pressurizes the coated portion of the electrode sheet, it is possible to forcibly stretch the uncoated portion, and it is possible to prevent wrinkling of the uncoated portion in the rolling process of the electrode sheet.

### Description of Drawings

Figures 1 and 2 are diagrams for explaining a process of rolling an electrode sheet using a conventional rolling roll.
Figures 3 and 4 are diagrams for explaining a process of rolling an electrode sheet using a rolling roll according to one example of the present invention.
Figure 5 is a cross-section of a rolling roll according to one example of the present invention.
Figure 6 is a diagram for explaining a structure of a rolling roll according to one example of the present invention.

### Mode for Invention

Hereinafter, a rolling roll according to one example of the present invention, and an electrode rolling device comprising the same will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

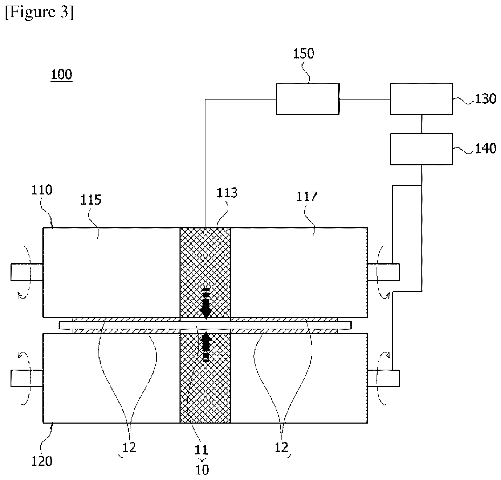

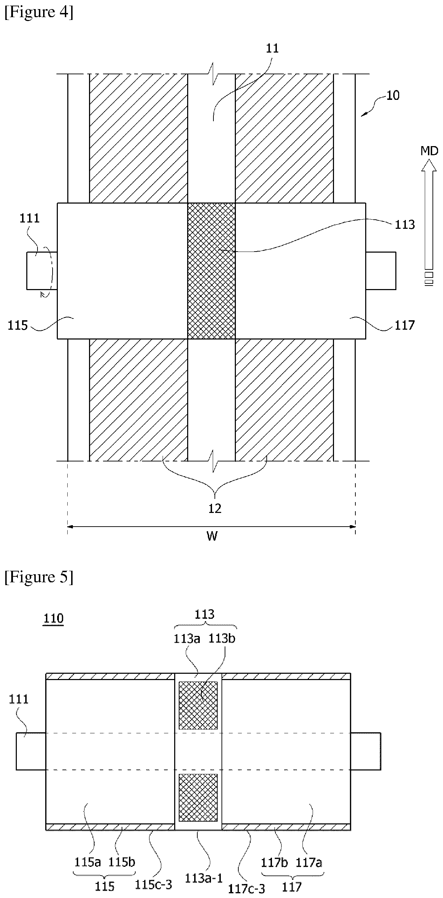

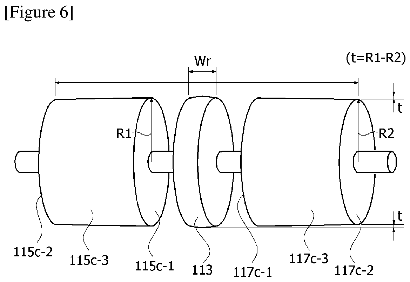

Figures 3 and 4 are diagrams for explaining a process of rolling an electrode sheet using a rolling roll according to one example of the present invention, Figure 5 is a cross-section of a rolling roll according to one example of the present invention, and Figure 6 is a diagram for explaining a structure of a rolling roll according to one example of the present invention.

Referring to Figures 3 and 4, the electrode rolling device (100) according to one example of the present invention comprises a pair of rolling rolls (110, 120), and a control part (130). The control part (130) controls an operation of each rolling roll (110, 120).

Each rolling roll (110, 120) comprises a rotating shaft (111), and a pair of roll members (115, 117) mounted apart from each other at a predetermined interval on the rotating shaft (111), and each located on the coated portion (12) of the electrode sheet (10). In addition, each rolling roll (110, 120) comprises an induction heating roll (113) disposed between the pair of roll members (115, 117) and mounted on the rotating shaft (111).

The induction heating roll (113) comprises an induction coil (113b) located on the uncoated portion (11) of the electrode sheet (10) and provided to be inductively heated upon rotation of the rotation shaft (111), and a main body (113a) surrounding the induction coil (113b).

The pair of rolling rolls (110, 120) is disposed on the traveling path (MD) of the electrode sheet (10), and disposed above and below the electrode sheet (10). The pair of rolling rolls (110, 120) is disposed to pressurize the electrode sheet (10) up and down.

The electrode rolling device (100) may comprise a power supply part (150) electrically connected to the induction coil (113b), and a drive part (140, for example, a motor) for rotating the rotation shaft (111) of the rolling rolls (110, 1200). The power supply part (150) and the drive part (140) may be controlled by the control part (130).

As explained through Figures 1 and 2, the electrode sheet (10) has the coated portion (12) and the uncoated portion (11). The induction heating roll (113) is located on the uncoated portion (11) of the electrode sheet (10) to transfer heat to the uncoated portion (11) of the electrode sheet (10).

The induction coil (113b) is electrically connected to the power supply part (150). When an alternating voltage is applied to the induction coil (113b) through the power supply part (150), an induced current is generated, where such an induced current may cause the main body (113a) to generate Joule heat. In addition, when the induction heating roll (113) is located on the uncoated portion (11) of the electrode sheet (10), the induction heating roll (113) may transfer heat toward the uncoated portion (11) of the electrode sheet (10) in the process of rolling the coated portion (12) by the pair of roll members, and forced stretching may easily occur in the uncoated portion (11).

In addition, the pair of rolling rolls (110, 120) pressurizes and rolls the electrode sheet (10) while rotating in opposite directions to each other.

The pair of rolling rolls (110, 120) has the same structure and operation method, and for convenience of explanation, the present example will be described focusing on the rolling roll (110) disposed at the top with reference to Figure 3.

The rolling roll (110) related to one example of the present invention comprises a rotating shaft (111), an induction heating roll (113), and a pair of roll members (115, 117).

Referring to Figures 4 and 5, the rolling rolls (110, 120) comprises a rotating shaft (111), and a pair of roll members (115, 117) mounted apart from each other at a predetermined interval on the rotating shaft (111) and each located on the coated portion (12) of the electrode sheet (10). In addition, each rolling roll (110, 120) comprises an induction heating roll (113) disposed between the pair of roll members (115, 117) and mounted on the rotating shaft (111).

As the induction heating roll (113), an induction heating roll (113) comprising an induction coil (113b) located on the uncoated portion (11) of the electrode sheet (10) and provided to be inductively heated upon rotation of the rotating shaft (111), and a main body (113a) surrounding the induction coil (113b) is included.

The rotating shaft (111) is installed parallel to the width direction (w) of the electrode sheet (10). The rotation direction and rotation speed of the rotating shaft (111) may be controlled by the control part (130).

The induction heating roll (113) is mounted on the rotating shaft (111) to be disposed at a position facing the uncoated portion (11) of the electrode sheet (10), and transfers heat to the uncorded portion (11) while being inductively heated upon rotation of the rotating shaft (111). As one example, if the uncoated portion (11) is provided in the central portion of the electrode sheet (10) in the width direction (w), the induction heating roll (113) may be mounted on the central portion of the rotating shaft (111). Upon the rolling process, the control part (130) may rotate the rolling roll (110) through the drive part (140) and apply alternate current to the induction coil (113b) through the power supply part (150).

The induction heating roll (113) comprises a main body (113a) mounted on the rotating shaft (110), and an induction coil (113b) disposed in the main body (113a).

In addition, the induction coil (113b) is provided to generate heat upon alternate current application, and the main body (113a) of the induction heating roll (113) has a heating roll surface (113a-1) that is heated by heat transferred from the induction coil (113b).

Referring to Figures 5 and 6, the main body (113a) is mounted on the rotating shaft (111) to surround the induction coil (113b). The main body (113a) has a heating roll surface (113a-1) having a roll width (Wr) corresponding to the width of the uncoated portion (11) and heated by heat transferred from the induction coil (113b).

Also, the main body (113a) has a diameter larger than the diameter of the rotating shaft (111). The main body (113a) has a cylindrical shape with a circular cross section. The main body (113a) is mounted on the rotating shaft (111) to surround the central portion of the rotating shaft (111). As one example, the main body (113a) may be formed of a stainless-steel material.

In addition, the induction coil (113b) is built into the main body (113a), and generates heat while generating a magnetic field upon alternate current application. By the heat generated by the induction coil (113b), the main body (113a) is heated to a predetermined temperature. Furthermore, the heat is transferred to the outside (uncoated portion) of the main body through the heating roll surface (113a-1).

In the rolling process of the electrode sheet (10), the induction heating roll (113) is disposed to face the uncoated portion (11) and transfers heat to the uncoated portion (11), thereby causing the uncoated portion (11) to be forcibly stretched, whereby it is possible to prevent wrinkling of the uncoated portion (11).

The pair of roll members (115, 117) is provided on both sides of the induction heating roll (113). The pair of roll members (115, 117) is mounted on the rotating shaft (111), thereby pressurizing, and rolling the electrode sheet (10) upon rotation of the rotating shaft (111).

When the induction heating roll (113) is installed in the central portion of the rotating shaft (111), the pair of roll members (115, 117) are each mounted on the rotating shaft (111) with the induction heating roll (113) interposed therebetween. In this example, for convenience of explanation, the pair of roll members are separately referred to as a first roll member (115) and a second roll member (117) depending on the installation position.

The pair of roll members (115, 117) comprises a first roll member (115) disposed on one side of the induction heating roll (113) and having a first roll surface in contact with the rolling object (the coated portion of the electrode sheet), and a second roll member (117) disposed on the other side of the induction heating roll (113) and having a second roll surface in contact with the rolling object (the coated portion of the electrode sheet).

Referring to Figures 3 and 4, the electrode rolling device (100) may perform the rolling process of two coated portions (12) through the pair of roll members (115, 117), and may apply heat to the uncoated portion (11) located between the two coated portions (12) through the induction heating roll (113).

Referring to Figures 5 and 6, the first roll member (115) may be mounted on the rotating shaft (111) at one side of the induction heating roll (113). The first roll member (115) may be mounted on the rotating shaft (111) to be separable from the induction heating roll (113).

The first roll member (115) may have a first roll surface (115c-3) pressurizing and rolling the coated portion (12) upon rotation of the rotating shaft (111), and the first roll surface (115c-3) may be connected to the heating roll surface (113a-1) without any step.

Also, the first roll member (115) comprises a first core part (115a) and a first surface part (115b). Specifically, the first roll member (115) may comprise a first core part (115a) coupled to the rotating shaft (111), and a first surface part (115b) surrounding the first core part (115a) and having a thermal conductivity lower than the thermal conductivity of the first core part (115a).

In addition, the first core part (115a) may have a truncated cone structure. The first core part (115a) may be mounted on the rotating shaft (111), and the first core part (115a) may be formed of a stainless-steel material.

Furthermore, the first surface part (115b) is provided to surround the first core part (115a), and has a thermal conductivity different from that of the first core part (115a). The first surface part (115b) may be formed on the surface of the first core part (115a) with a material having a lower thermal conductivity than the thermal conductivity of the first core part (115a).

Referring to Figure 6, the first roll member (115) has a first inner side surface (115c-1) being in contact with the induction heating roll (113) and having the same diameter as the diameter of the induction heating roll (113), and a first outer side surface (115c-2) in a direction opposite to the inner side surface (115c-1), and the first roll surface (115c-3) connects the first inner side surface (115c-1) and the first outer side surface (115c-2).

The first roll member (115) has a truncated cone shape having the first inner side surface (115c-1), the first outer side surface (115c-2), and the first roll surface (115c-3). Here, the first inner side surface (115c-1) is a surface in contact with one surface of the induction heating roll (113).

The first outer side surface (115c-2) is a surface having a diameter smaller than the diameter of the first inner side surface (115c-1) and provided to be in parallel with the first inner side surface (115c-1). In addition, the first roll surface (115c-3) is a surface surrounding the rotating shaft (111) and connecting the first inner side surface (115c-1) and the first outer side surface (115c-2). The first surface part (115b) is provided in the first roll surface (115c-3).

The first roll member (115) has a structure in which the cross-sectional diameter of the first roll surface (115c-3) becomes smaller as it goes from the first inner side surface (115c-1) to the first outer side surface (115c-2). The first roll member (115) may be provided so that the diameter of the first inner side surface (115c-1) is the same as the diameter of the induction heating roll (113).

In addition, the first roll member (115) may be provided so that the diameter (or radius) of the first outer side surface is smaller than the diameter (or radius) of the first inner side surface.

The first roll member (115) is provided so that the radius (R1) of the first inner side surface is larger than the radius (R2) of the first outer side surface in a range of 0.3mm to 0.5mm. That is, the difference (R1-R2=t) between the radius (R1) of the first inner side surface (115c-1) and the radius (R2) of the first outer side surface (115c-2) is in a range of 0.3mm to 0.5mm.

In addition, the pair of roll members (115, 117) may be symmetrically arranged based on the induction heating roll (113). That is, the first and second roll members (115, 117) have a symmetrical shape based on the induction heating roll (113).

The second roll member (117) is mounted on the rotating shaft (111) at the other side of the induction heating roll (113). The second roll member (117) may be mounted on the rotating shaft (111) to be separable from the induction heating roll (113). The second roll member (117) is mounted on the rotating shaft (111) to be spaced apart from the first roll member (115) with the induction heating roll (113) interposed therebetween. The second roll member (117) has a second roll surface (117c-3) pressurizing and rolling the coated portion (12) upon rotation of the rotating shaft (111). In addition, the second roll surface (117c-3) may be connected to the heating roll surface (113a-1) without any step.

Referring to Figures 5 and 6, the second roll member (117) comprises a second core part (117a) and a second surface part (117b). Specifically, the second roll member (117) may comprise a second core part (117a) coupled to the rotating shaft (111), and a second surface part (117b) surrounding the second core part (117a) and having a thermal conductivity lower than the thermal conductivity of the second core part (117a).

Also, the second core part (117a) is provided in a truncated cone structure. The second core part (117a) may be mounted on the rotating shaft (111), and the second core part (117a) may be formed of the same material as that of the first core part (115a).

In addition, the second surface part (117b) is provided to surround the second core part (117a) and has a thermal conductivity different from that of the second core part (117a). The second surface part (117b) may be formed of a material having a lower thermal conductivity than the thermal conductivity of the second core part (117a) on the surface of the second core part (117a).

Referring to Figure 6, the second roll member (117) has a second inner side surface (117c-1) being in contact with the induction heating roll (113) and having the same diameter as the diameter of the induction heating roll, and a second outer side surface (117c-2) in a direction opposite to the second inner side surface (117c-l), and the second roll surface (117c-3) connects the second inner side surface (117c-1) and the second outer side surface (117c-2).

In addition, the second roll member (117) has a truncated cone shape having the second inner side surface (117c-1), the second outer side surface (117c-2), and the second roll surface (117c-3). Here, the second inner side surface (117c-1) is a surface in contact with the other surface of the induction heating roll (113). The second roll member (117) may be provided so that the diameter of the second inner side surface (117c-1) is the same as the diameter of the induction heating roll (113).

The second outer side surface (117c-2) is a surface having a diameter (or radius) smaller than the diameter of the second inner side surface (117c-1) and provided to be in parallel with the second inner side surface (117c-1).

Also, the second roll member (117) may be provided so that the diameter (or radius) of the second outer side surface is smaller than the diameter (or radius) of the second inner side surface.

In addition, the second roll member (117) has a structure in which the cross-sectional diameter of the second roll surface (117c-3) becomes smaller as it goes from the second inner side surface (117c-1) to the second outer side surface (117c-2). The second roll surface (117c-3) is a surface surrounding the rotating shaft (111) and connecting the second inner side surface (117c-1) and the second outer side surface (117c-2). The second surface part (117b) is provided in the second roll surface (117c-3).

Furthermore, the second roll member is provided so that the radius (R1) of the second inner side surface is larger than the radius (R2) of the second outer side surface in a range of 0.3mm to 0.5mm. That is, the difference (R1-R2=t) between the radius (R1) of the second inner side surface (117c-1) and the radius (R2) of the second outer side surface (117c-2) is in the range of 0.3mm to 0.5mm.

As described above, by comprising the pair of roll members (115, 117) pressurizing and rolling the coated portion (12) of the electrode sheet (10), and the induction heating roll (113) providing the uncoated portion (11) with heat, heat is provided to the uncoated portion (11) in the rolling process of the electrode sheet (10), whereby it is possible to prevent wrinkling of the uncoated portion (11).

One example of the present invention as described above has been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to a rolling roll related to at least one example of the present invention and an electrode rolling device comprising the same, when the rolling roll presses the coated portion of the electrode sheet, by providing the uncoated portion of the electrode sheet with heat when the rolling roll pressurizes the coated portion of the electrode sheet, it is possible to forcibly stretch the uncoated portion, and it is possible to prevent wrinkling of the uncoated portion in the rolling process of the electrode sheet.

## Claims

1. A rolling roll comprising:
a rotating shaft;
a pair of roll members mounted apart from each other at a predetermined interval on the rotating shaft; and
an induction heating roll disposed between the pair of roll members, mounted on the rotation shaft, and including an induction coil provided to be inductively heated upon rotation of the rotating shaft, and a main body surrounding the induction coil.

2. The rolling roll according to claim 1, wherein
the induction coil is provided to generate heat upon alternate current application, and
the main body of the induction heating roll has a heating roll surface which is heated by heat transferred from the induction coil.

3. The rolling roll according to claim 1, wherein
the pair of roll members comprises a first roll member disposed on one side of the induction heating roll and having a first roll surface in contact with a rolling object, and a second roll member disposed on the other side of the induction heating roll and having a second roll surface in contact with the rolling object.

4. The rolling roll according to claim 3, wherein
the first roll member has a first inner side surface being in contact with the induction heating roll and having the same diameter as the diameter of the induction heating roll, and a first outer side surface in a direction opposite to the first inner side surface, and
the first roll surface connects the first inner side surface and the first outer side surface.

5. The rolling roll according to claim 4, wherein
in the first roll member, the diameter of the first outer side surface is smaller than the diameter of the first inner side surface.

6. The rolling roll according to claim 3, wherein
the first roll member comprises a first core part coupled to the rotating shaft, and a first surface part surrounding the first core part and having a lower thermal conductivity than the thermal conductivity of the first core part.

7. The rolling roll according to claim 3, wherein
the second roll member has a second inner side surface being in contact with the induction heating roll and having the same diameter as the diameter of the induction heating roll, and a second outer side surface in a direction opposite to the second inner side surface, and
the second roll surface connects the second inner side surface and the second outer side surface.

8. The rolling roll according to claim 7, wherein
in the second roll member, the diameter of the second outer side surface is smaller than the diameter of the second inner side surface.

9. The rolling roll according to claim 3, wherein
the second roll member comprises a second core part coupled to the rotating shaft, and a second surface part surrounding the second core part and having a lower thermal conductivity than the thermal conductivity of the second core part.

10. The rolling roll according to claim 1, wherein
the pair of roll members is symmetrically arranged based on the induction heating roll.

11. An electrode rolling device comprising:
a pair of rolling rolls disposed on a traveling path of an electrode sheet provided with a coated portion and an uncoated portion, and pressurizing the electrode sheet up and down; and
a control part controlling an operation of each rolling roll, wherein
each rolling roll comprises: a rotating shaft;
a pair of roll members mounted apart from each other at a predetermined interval on the rotating shaft, and each positioned on the coated portion of the electrode sheet; and
an induction heating roll disposed between the pair of roll members, mounted on the rotating shaft, located on the uncoated portion of the electrode sheet, and including an induction coil provided to be inductively heated upon rotation of the rotating shaft, and a main body surrounding the induction coil.

12. The electrode rolling device according to claim 11, wherein
the induction coil is provided to generate heat upon alternate current application, and
the main body of the induction heating roll has a heating roll surface which is heated by heat transferred from the induction coil and disposed to face the uncoated portion.

13. The electrode rolling device according to claim 11, wherein
the pair of roll members comprises a first roll member disposed on one side of the induction heating roll and having a first roll surface in contact with a rolling object, and a second roll member disposed on the other side of the induction heating roll and having a second roll surface in contact with the rolling object,
the first roll member has a first inner side surface being in contact with the induction heating roll and having the same diameter as the diameter of the induction heating roll, and a first outer side surface in a direction opposite to the first inner side surface,
the first roll surface connects the first inner side surface and the first outer side surface,
the second roll member has a second inner side surface being in contact with the induction heating roll and having the same diameter as the diameter of the induction heating roll, and a second outer side surface in a direction opposite to the second inner side surface, and
the second roll surface connects the second inner side surface and the second outer side surface.

14. The electrode rolling device according to claim 13, wherein
in the first roll member, the diameter of the first outer side surface is smaller than the diameter of the first inner side surface, and
in the second roll member, the diameter of the second outer side surface is smaller than the diameter of the second inner side surface.

15. The electrode rolling device according to claim 11, wherein
the first roll member comprises a first core part coupled to the rotating shaft, and a first surface part surrounding the first core part and having a lower thermal conductivity than the thermal conductivity of the first core part, and
the second roll member comprises a second core part coupled to the rotating shaft, and a second surface part surrounding the second core part and having a lower thermal conductivity than the thermal conductivity of the second core part.
